# EUROPÄISCHE PATENTSCHRIFT

(11) **EP 3 014 151 B1**
(45) Veröffentlichungstag und Bekanntmachung des Hinweises auf die Patenterteilung: **13.11.2019**
(21) Anmeldenummer: 14733514.5
(22) Anmeldetag: 28.05.2014
(51) Int. Cl.: F16K 1/44

(54) **ASEPTISCHE VENTILANORDNUNG, ANLAGE ZUR PRODUKTFÜHRUNG UND VERFAHREN ZUM BETREIBEN EINER ANLAGE**
ASEPTIC VALVE ASSEMBLY, SYSTEM FOR CONDUCTING A PRODUCT, AND METHOD FOR OPERATING A SYSTEM
SYSTÈME DE VANNE ASEPTIQUE, INSTALLATION DE GUIDAGE DE PRODUITS ET PROCÉDÉ DE CONDUITE DE CETTE INSTALLATION

(30) Priorität: 24.06.2013 DE 102013010429
(43) Veröffentlichungstag der Anmeldung: 04.05.2016
(73) Patentinhaber: GEA Tuchenhagen GmbH, 21514 Büchen (DE)
(72) Erfinder: HAGNAUER, Thomas, Christian, 3608 Thun (CH)
(74) Vertreter: Hauck Patentanwaltspartnerschaft mbB
(86) Internationale Anmeldenummer: PCT/EP2014/001428
(87) Internationale Veröffentlichungsnummer: WO 2014/206520

(56) Entgegenhaltungen:
- DE-A1-102007 011 094
- DE-U1- 20 317 882
- US-A- 2 755 130
- US-A- 3 260 504
- US-A- 3 563 268
- US-A- 5 390 694
- US-A1- 2013 056 091

## Beschreibung

Die Erfindung betrifft eine aseptische Ventilanordnung nach Anspruch 1, eine Anlage zur Produktführung nach Anspruch 10 und ein Verfahren zum Betreiben einer Anlage nach Anspruch 12.

In der sterilen Verfahrenstechnik, beispielsweise in der Lebensmitteltechnologie, werden aseptische Ventilanordnungen eingesetzt, um Produkt von einer ersten Produktleitung in eine zweite Produktleitung leiten zu können.

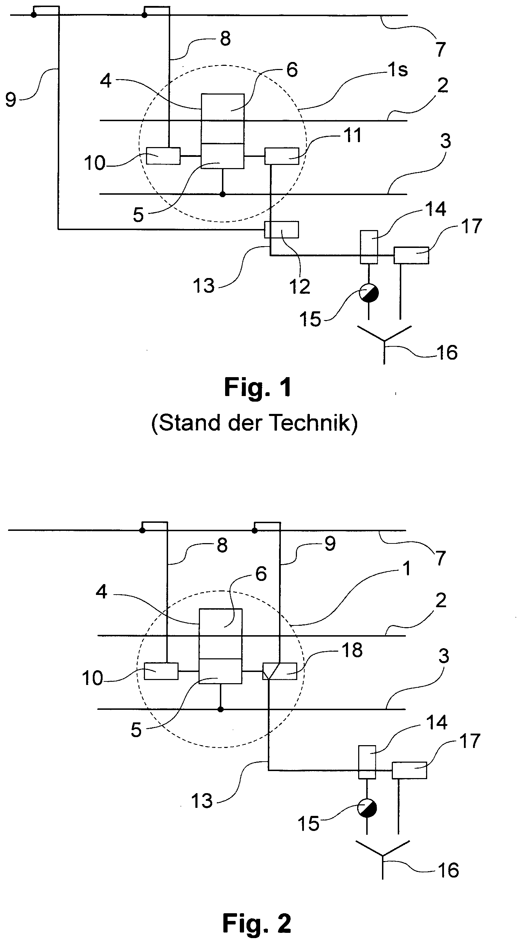

Eine gattungsgemäße Ventilanordnung, eingebaut in einer Anlage, ist in Fig. 1 dargestellt. Die Ventilanordnung 1s ist zwischen einer ersten Produktleitung 2 und einer zweiten Produktleitung 3 angeordnet und weist ein Produktventil 4 auf. Im geöffneten Zustand des Produktventils wird eine Fluidverbindung zwischen erster Produktleitung 2 und zweiter Produktleitung 3 durch Kammer 5 und Einlasskammer 6 hindurch geschaltet, so dass ein Produktstrom zwischen den Produktleitungen möglich ist. Aufgrund der zwei Kammern 5 und 6 wird das Produktventil auch Doppelkammerventil genannt.

Die Anlage besitzt eine Dampfleitung 7, von der eine erste Zweigleitung 8 und ein zweite Zweigleitung 9 abzweigen und zur Ventilanordnung 1s führen. Die erste Zweigleitung 8 ist mit einem Dampfventil 10 verbunden, welches an die Kammer 5 angeschlossen ist. Mit Hilfe dieses Dampfventils 10 ist die Kammer 5 zeitweilig mit Dampf beaufschlagbar. Die zweite Zweigleitung 9 ist an ein Zuschaltventil12 angeschlossen, welches seinerseits mit dem Leckageventil 11 und einer Entsorgungsleitung 13 verbunden ist.

Bei heiklen Produkten ist es üblich, als zusätzliche Sicherheit das Leckageventil 11, auch als Seitenventil bezeichnet, am Produktventil 4 mit Dampf zu beaufschlagen, um das Kontaminationsrisiko durch die Atmosphäre zu eliminieren. Dies wird bisher über das zusätzliche als Absperrventil ausgebildete Zuschaltventil 12 am Leckage-Austritt realisiert.

Die Entsorgungsleitung 13 führt den Fluidstrom zu einem Zweigventil 14. Der Fluidstrom kann mittels dieses Zweigventils 14 auf einen Kondensatableiter 15 geschaltet werden, durch den kondensierter Dampf einer Entsorgungseinrichtung 16 zugeführt werden kann. Wahlweise kann das Zweigventil 14 den Fluidstrom statt auf den Kondensatableiter 15 auf ein Entsorgungsventil 17 richten. Wird in dieser Beschaltung das Entsorgungsventil 17 geöffnet, ist der Fluidstrom unter Umgehung des Kondensatableiters 15 auf die Entsorgungseinrichtung 16 gerichtet.

Eine ähnliche Ventilanordnung ist aus der DE 203 17 882 U1 bekannt. In dieser sind Dampfventil 10 und Leckageventil 11 gezeigt. Zur Vereinfachung der Darstellung wurden dort das Zuschaltventil 12 und die Details des Entsorgungszweiges weggelassen. Die DE 203 17 882 U1 geht von einem Prozessventil mit zwei Ventilkammern und einer Sperrkammer aus, wobei die Sperrkammer in zwei Einzelsperrkammern unterteilbar ist. Jeder der Einzelsperrkammern ist unabhängig von der anderen mit einem Sperrmedium beaufschlagbar. Hierzu sind an den Einzelsperrkammern Eintritts- und Austrittsöffnungen vorgesehen, die mit Einzelsperrkammer-Absperrorgane freigebbar und verschließbar sind. Die Einzelsperrkammer-Absperrorgane können als Hubspindelventile ausgeführt sein.

Eine geringfügig andere Art der Dampfbarriere ist in der EP 0 332 806 A2 gezeigt. Dampfventil 10 und Leckageventil 11 sind vorhanden, das Zuschaltventil 12 ist jedoch durch ein Absperrventil in der Zweigleitung 9 ersetzt, das in der EP 0 332 806 A2 mit dem Bezugszeichen 15 bezeichnet ist.

Diese im Stand der Technik bekannten Ventilanordnungen sind konstruktiv aufwändig. Die steuerungstechnische Umsetzung des Verfahrens zum Betrieb der Ventilanordnung ist ebenfalls aufwändig.

Es war daher Aufgabe der Erfindung, eine vereinfachte Ventilanordnung zu schaffen, die zu einer Vereinfachung der Anlage zur Produktführung führt, sowie eine vereinfachte Anlage und ein einfaches Verfahren zum Betreiben der Anlage vorzustellen.

Diese Aufgabe wird gelöst durch ein eine Ventilanordnung mit den Merkmalen des Anspruchs 1. Die abhängigen Ansprüche 2 bis 13 geben vorteilhafte Ausgestaltungen an.

Der erfinderische Grundgedanke ist, das Leckageventil der Ventilanordnung durch ein Umschaltventil zu ersetzen. Dieses ist dabei so angeordnet, dass mit ihm einerseits eine Fluidverbindung zwischen einer Kammer und einem Auslass der Ventilanordnung und andererseits zwischen einem Einlass, der mit einer Dampfleitung verbindbar ist, und dem Auslass geschaltet werden kann. Die Kammer besitzt neben zwei Produktöffnungen, die mittels Schließelementen verschließbar sind, eine erste Nebenöffnung und eine zweite Nebenöffnung, wobei das Umschaltventil mit der zweiten Nebenöffnung verbunden ist, welche verschlossen wird, wenn die Fluidverbindung zwischen Einlass und Auslass hergestellt wird. Das Umschaltventil besitzt die Funktion eines Leckageventils und eines Dampfventils, wobei die Funktionen gekoppelt sind, das heißt sobald das Umschaltventil in seiner Funktion als Leckageventil schließt öffnet es in seiner Funktion als Dampfventil und umgekehrt. Dadurch entsteht ein erheblicher wirtschaftlicher und technischer Vorteil. Der wirtschaftliche Vorteil resultiert aus einem geringeren Installationsaufwand, unter anderem für Ventil, Ansteuerung und Rückmeldung. Ein technischer Vorteil besteht, weil die Funktionen des Leckageventils und des Dampfventils mechanisch verriegelt sind. Wenn die Zufuhr von Dampf geöffnet wird, schließt das Leckageventil und umgekehrt. Dadurch besteht kein Risiko einer Fehlschaltung. In der Summe wird die Ventilanordnung hierdurch vereinfacht. In der Anlage wird das Zuschaltventil überflüssig und somit eingespart. Zudem verringert sich der steuerungstechnische Aufwand.

Eine sehr gute Reinigbarkeit der Ventilanordnung wird erzielt, wenn die Schließglieder zum Verschließen der Produktöffnungen getrennt voneinander betätigbar sind.

Zwischen erstem und zweitem Schließelement kann ein erster Balg angeordnet sein. Ein zweiter Balg kann zwischen zweitem Schließelement und einer Gehäusedurchführung angeordnet sein. Der Balg oder die Bälge verbessern die Eigenschaften der Ventilanordnung für den Einsatz in Anwendungen mit hohen Anforderungen an Sterilität.

Ein einfacher Aufbau des Umschaltventils wird in einer Weiterbildung erreicht, indem das Umschaltventil einen Schließer mit zwei Dichtungsanordnungen umfasst.

Die Ventilanordnung kann kompakter und kostengünstiger gestaltet werden, indem eine der Dichtungsanordnungen des Schließers mit einem im Gehäuse der Ventilanordnung vorgesehenen Ventilsitz zusammenwirkt.

Es ist hinsichtlich der Fluiddynamik und Kräfteeinwirkung auf die Ventilanordnung vorteilhaft, Schließer, Dichtungsanordnungen und Ventilsitze des Umschaltventils so zu gestalten, dass die jeweilige Schließstellung durch eine Kraft bewirkt wird, die einer jeweils auf den Auslass gerichteten Strömung entgegengerichtet ist.

Kostengünstig, erprobt und in Anlagen verbreitet sind Druckmittelversorgungen, so dass vorteilhaft wenigstens erstes Schließelement, zweites Schließelement und Umschaltventils druckmittelbetrieben verstellbar ausgeführt sind.

Um höchsten Anforderungen an die Reinigbarkeit entsprechen zu können, die beispielsweise in der Reinigbarkeit zweier Paare aus Dichtung und Ventilsitz im Produktweg bei gleichzeitiger Beibehaltung einer Sterilbarriere bestehen, kann die Ventilanordnung wenigstens eine zweite Kammer umfassen, die ihrerseits Nebenöffnungen besitzt, an die ein Dampfventil und ein Umschaltventil angeschlossen sind.

Die Anlage zur Produktführung weist ein Produktventil zum Schalten eines Produktstromes zwischen einer ersten Produktleitung und einer zweiten Produktleitung auf, wobei im Produktventil eine Kammer vorgesehen ist, welche von Produkt durchströmbar ist und in welcher eine Sterilbarriere ausbildbar ist. Die Kammer ist mit einem Umschaltventil verbunden, mittels welchem ein Auslass wahlweise mit der Kammer oder mit einem am Umschaltventil vorgesehenen Einlass verbunden werden kann. Der Einlass ist mit einer Dampfleitung verbunden, wobei im Umschaltvorgang beim Herstellen der Verbindung zwischen Auslass und Einlass die Kammer vom Auslass getrennt wird. Dieser Anlagenaufbau verzichtet auf Zuschaltventil und Leckageventil gemäß Stand der Technik und erlaubt auf diese Weise eine Dampfbeaufschlagung mit einfacheren Mitteln. Die Komponentenzahl wird verringert, der steuerungstechnische Aufwand sinkt.

Ein zwischen Kammer und einer Dampfleitung angeordnetes Dampfventil ermöglicht vorteilhaft das Einrichten einer Dampfsperre in der Kammer.

Vorteilhaft ist der Auslass des Umschaltventils mit einer Entsorgungsleitung verbunden, welche an ein Zweigventil angeschlossen ist. Das Zweigventil erlaubt es, den Fluidstrom aus dem Auslass auf einen Kondensatableiter umzuschalten, so dass mit einem einfachen Aufbau Kondensat aus der Anlage abgeführt werden kann.

Ein vorteilhaftes Verfahren dient zum Betreiben einer Anlage, die eine erste und eine zweite Produktleitung besitzt, wobei die beiden Produktleitungen mittels einen Produktventils miteinander verbindbar sind. Das Produktventil umfasst eine Kammer, in der bei der Trennung von erster und zweiter Produktleitung voneinander eine Sterilbarriere ausbildbar ist. Vor dem Öffnen des Produktventils zum Verbinden von erste und zweiter Produktleitung wird ein Umschaltventil derart umgeschaltet, dass eine Fluidverbindung zwischen Kammer und einer Entsorgungsleitung auf eine Fluidverbindung zwischen Dampfleitung und der Entsorgungsleitung umgeschaltet wird. Die Fluidverbindungen sind durch die Verwendung eines Umschaltventils aneinander gekoppelt. Da entweder die eine oder die andere Fluidverbindung besteht und so eine falsche Fluidverbindung ausgeschlossen wird, ist das Verfahren sehr sicher. Zudem ist der Schaltungs- und Steuerungsaufwand geringer als im Stand der Technik, wodurch zusätzliche Sicherheit und Kostenersparnis erreicht werden.

Sicherheit und einfache Bedienung werden zusätzlich verbessert, wenn das Verfahren so weitergebildet wird, dass die Entsorgungsleitung über einen Kondensatableiter mit einer Entsorgungseinrichtung verbunden wird.

Anhand eines Ausführungsbeispiels und seiner Weiterbildungen sollen die Erfindung näher erläutert und die Darstellung der Wirkungen und Vorteile vertieft werden.

Es zeigen:
- Fig. 1:: Schematische Darstellung des Anlagenteils mit einer Ventilanordnung gemäß Stand der Technik;
- Fig. 2:: Schematische Darstellung des Anlagenteils mit einer Ventilanordnung gemäß Ausführungsbeispiel;
- Fig. 3:: Längsschnitt entlang der Schnittlinie A-A durch die Ventilanordnung gemäß Ausführungsbeispiel;
- Fig. 4: Längsschnitt entlang der Schnittlinie A-A durch ein Ventilgehäuse;
- Fig. 5:: Seitlicher Blick auf die Ventilanordnung gemäß Ausführungsbeispiel;
- Fig. 6:: Draufsicht entlang der Längsachse auf die Ventilanordnung;
- Fig. 7:: Darstellung des Anlagenteils im Prozessschritt der sterilen Trennung der Produktzweige;
- Fig. 8:: Darstellung des Anlagenteils im Prozessschritt der Produktion;
- Fig. 9:: Darstellung des Anlagenteils im Prozessschritt des Spülens;
- Fig. 10:: Weiterbildung der Ventilanordnung in einer schematischen Darstellung.

Eine Anlage mit einer Ventilanordnung 1 zum Schalten eines Produktstromes zwischen einer ersten Produktleitung 2 und einer zweiten Produktleitung 3 ist in Fig. 2 schematisch dargestellt. Im Fluidstrom ist zwischen den Produktleitungen 2 und 3 ein Produktventil 4 zum Sperren oder Öffnen einer Fluidverbindung zwischen den Produktleitungen 2 und 3 vorgesehen. Das Produktventil 4 umfasst eine Kammer 5 und eine Einlasskammer 6. Die Kammer 5 ist mit der zweiten Produktleitung 3 fluidverbunden, die Einlasskammer 6 ist mit der ersten Produktleitung 2 fluidverbunden. Ein Fluidstrom durch die Kammern 5 und 6 und somit zwischen erster und zweiter Produktleitung 2 und 3 ist mit Mitteln schaltbar, die weiter unten erläutert werden. Die Anlage umfasst eine Dampfleitung 7, in der bevorzugt ein Dampf mit hohem Wasseranteil als Sterilisationsmedium geführt wird. Statt Wasserdampf ist ein anderes steriles Fluid denkbar, beispielsweise beinhaltend Peressigsäure oder Wasserstoffperoxid, wobei Wasserdampf Vorteile mit sich bringt, beispielsweise einfache Verfügbarkeit, kostengünstige Versorgung und einfache Entsorgung. Die Dampfleitung 7 ist mittels erster und zweiter Zweigleitung 8 und 9 mit der Kammer 5 verbunden. Zum Absperren des Dampfstromes aus der Dampfleitung 7 in die Kammer 5 ist ein Dampfventil 10 vorgesehen.

Die Anlage umfasst eine Entsorgungsleitung 13, welche einerseits mit der Ventilanordnung 1 und andererseits mit einem Zweigventil 14 verbunden ist. Das Zweigventil 14 erlaubt es, die Entsorgungsleitung 13 wahlweise mit einem Kondensatableiter 15 oder einem Entsorgungsventil 17 zu verbinden. Der Kondensatableiter 15 öffnet bei Vorliegen von kondensiertem Dampf, so dass dieser in eine Entsorgungseinrichtung 16 abgeleitet wird. Das Zweigventil 14 kann so geschaltet sein, dass der Fluidstrom zum Kondensatableiter 15 abgesperrt ist und stattdessen zum Entsorgungsventil 17 geführt ist. Ist das Entsorgungsventil 17 geöffnet, gelangt Fluid in die Entsorgungseinrichtung 16.

Die Ventilanordnung 1 besitzt ein Umschaltventil 18, welches mit der Kammer 5, der Dampfleitung 7 und der Entsorgungsleitung 13 verbunden ist. Die Verbindung zur Dampfleitung 7 kann direkt oder indirekt sein. Das Umschaltventil 18 ist dabei so ausgeführt und angeordnet, dass eine Fluidverbindung zwischen Kammer 5 und Entsorgungsleitung 13 durch Schalten des Umschaltventils 18 auf eine Fluidverbindung der mit der Dampfleitung 7 verbundenen zweiten Zweigleitung 9 mit der Entsorgungsleitung 13 umschaltbar ist. Bei diesem Umschaltvorgang wird gleichzeitig die Kammer 5 von der Entsorgungsleitung 13 getrennt. Der Umschaltvorgang ist umkehrbar, so dass die zweite Zweigleitung 9 verschlossen und die Fluidverbindung zwischen Kammer 5 und Entsorgungsleitung 13 hergestellt wird.

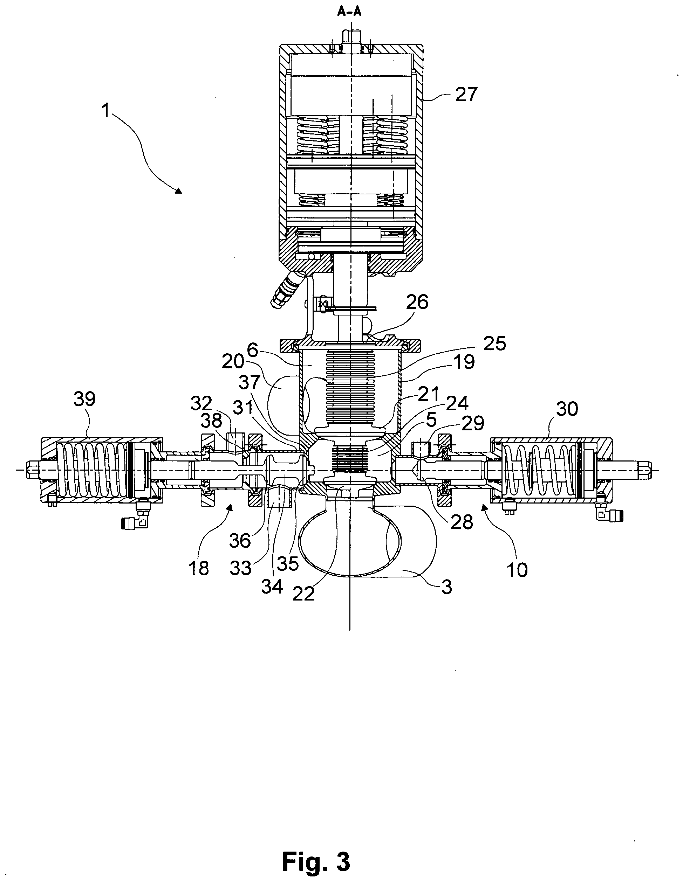

Eine vorteilhafte Ventilanordnung 1 ist gemäß erster Ausführungsform in den Fig. 3 bis 6 dargestellt.

Das Produktventil 4 der Ventilanordnung 1 besitzt ein Gehäuse 19 als Grundkörper, in dem und an dem Funktionselemente des Produktventils 4 und der Ventilanordnung 1 angeordnet sind.

Innerhalb des Gehäuses 19 befinden sich im Fluidstrom in Reihe hintereinander angeordnet eine Kammer 5 und eine Einlasskammer 6. Ein mit einer der Rohrleitungen, beispielsweise der ersten Produktleitung 2, verbindbarer Produktanschluss 20 ermöglicht den Fluidfluss von der Rohrleitung in die Einlasskammer 6 und umgekehrt. Wenn die Einlasskammer 6 mit der ersten Produktleitung 2 verbunden ist, ist die zweite Produktleitung 3 so an die Ventilanordnung 1 angeschlossen, dass ein Fluidstrom aus der zweiten Produktleitung 3 in die Kammer 5 möglich ist. Bei geöffneter Ventilanordnung 1 erfolgt der Fluidstrom aus erster Produktleitung 2 zunächst durch die Einlasskammer 6, anschließend durch die Kammer 5 und vor dort abschließend in die zweite Produktleitung 3. Der Fluidfluss kann prozessbedingt auch in umgekehrter Richtung erfolgen.

Innerhalb des Gehäuses sind ein erstes Schließelement 21 und ein zweites Schließelement 22 angeordnet. Das erste Schließelement 21 ist so gestaltet, dass es im Zusammenwirken mit einem gehäuseseitigen Element den Fluidstrom zwischen Kammer 5 und Einlasskammer 6 schaltet, das heißt freigibt oder sperrt. Das zweite Schließelement ist so gestaltet, dass es im Zusammenwirken mit einem gehäuseseitigen Element den Fluidstrom zwischen Kammer 5 und der an diese angeschlossene Rohrleitung schaltet. Erstes und zweites Schließelement 21 und 22 sind unabhängig voneinander in ihrer Stellung betätigbar, so dass die Schaltwirkung des einen Schließelements 21 oder 22 unabhängig von dem jeweils anderen Schließelement 22 oder 21 erreichbar ist.

Die Schließelemente 21 und 22 sind an einer Ventilstangenanordnung 23 angeordnet. Diese kann beispielsweise zwei koaxial zueinander angeordnete Stangen umfassen, wobei eine Stange in einer Hohlstange verläuft. Die Stangen sind unabhängig voneinander verschiebbar ausgeführt und je eine Stange trägt eines der Schließelemente 21 und 22.

Höchste hygienische und sterile Anforderungen werden erfüllt, wenn die Ventilstangenanordnung 23 mit einem ersten und einem zweiten Balg 24 und 25 zusammenwirkt.

Der erste Balg 24 ist mit seinem ersten Ende am Schließelement 21 und mit seinem gegenüberliegenden Ende am Schließelement 22 befestigt. Auf diese Weise umgibt der erste Balg 24 die Ventilstangenanordnung 23 zwischen dem ersten Schließelement 21 und dem zweiten Schließelement 22 dichtend.

Der zweite Balg 25 ist mit seinem ersten Ende am zweiten Schließelement 22 auf dessen dem ersten Schließelement 21 abgewandten Seite abgedichtet befestigt. Das gegenüberliegende Ende des Balges 25 endet an der Gehäusedurchführung 26, mittels welcher die Ventilstangenanordnung 23 aus dem Gehäuse 19 herausgeführt ist. Der zweite Balg 25 umgibt auf diese Weise die Ventilstangenanordnung 23 zwischen zweitem Schließelement 22 und Gehäusedurchführung 26 dichtend.

Die Verbindung zwischen Bälgen 24 und 25 und Schließelementen 21 und 22 kann im Falle von metallischen Materialien durch Schweißen ausgeführt sein.

Die Ventilstangenanordnung ist mit einem Hauptantrieb 27 wirkverbunden. Dieser weist Mittel auf, mit denen die Verstellung der Schließelemente 21 und 22 bewirkt wird. Vorteilhaft kostengünstig und einfach ist der Hauptantrieb 27 pneumatisch ausgeführt. In diesem Falle umfassen die Mittel zur Verstellung der Schließelemente 21 und 22 wenigstens einen Kolben und wenigstens eine Rückstellfeder.

An das Gehäuse 19 ist das Dampfventil 10 angeschlossen. Ein Innenraum des Dampfventils 10 ist in einer Offenstellung eines im Innenraum angeordneten Schließgliedes 28 mit der Kammer 5 verbunden. Das Dampfventil 10 weist einen Dampfeinlass 29 auf, der das Verbinden des Innenraumes des Dampfventils 10 mit der Dampfleitung 7 der Anlage erlaubt. Hierdurch tritt bei geöffnetem Schließglied 28 Dampf aus der Dampfleitung 7 durch das Dampfventil 10 in die Kammer 5 hinein. Das Schließglied 28 ist mittels eines geradlinig arbeitenden Antriebes 30 verstellbar.

An das Gehäuse 19 ist ein Umschaltventil 18 angeschlossen. Das Umschaltventil 18 weist einen Haupteinlass 31 auf, welcher mit dem Gehäuse 19 der Ventilanordnung 1 verbunden ist. Der Haupteinlass 31 ist so angeordnet, dass ein Innenraum des Umschaltventils 18 mit der Kammer 5 verbindbar ist. Das Umschaltventil 18 besitzt zusätzlich zum Haupteinlass 31 einen Einlass 32 und einen Auslass 33. Der Einlass 32 ist in der Anlage mit der Dampfleitung 7 verbunden, um Wasserdampf in das Umschaltventil 18 einlassen zu können. Der Auslass 33 ist im in die Anlage eingebauten Zustand des Umschaltventils 18 mit der Entsorgungsleitung 13 verbunden.

Im Umschaltventil 18 ist ein Schließer 34 mit einer ersten Dichtungsanordnung 35 und einer zweiten Dichtungsanordnung 36 vorgesehen. Der Schließer 34 kann unterschiedliche Stellungen einnehmen, insbesondere die beiden folgenden.

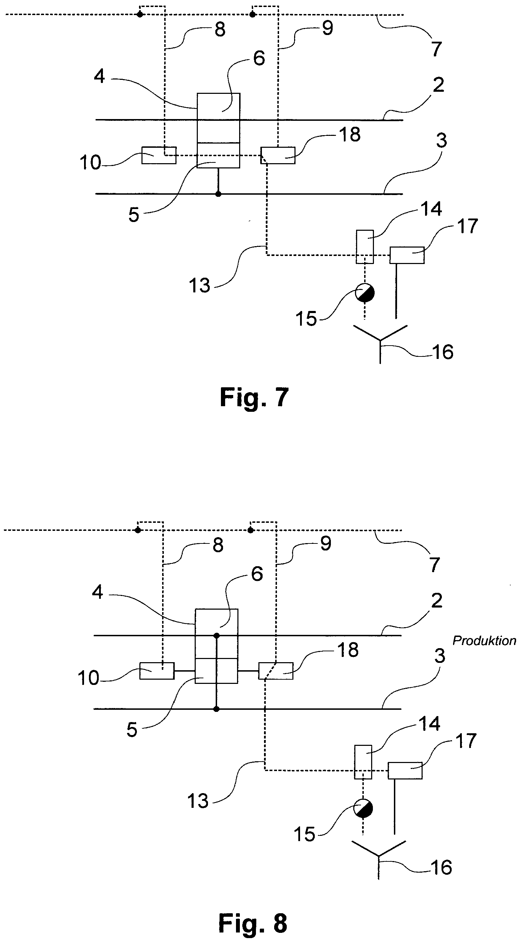

In der ersten der Stellungen ist die erste Dichtungsanordnung 35 dichtend in Kontakt mit einem ersten Ventilsitz 37 gebracht. Der Haupteinlass 31 des Umschaltventils 18 ist verschlossen, der Einlass 32 hingegen freigegeben. In dieser Schaltstellung des Schließers 34 besteht eine Fluidverbindung zwischen Einlass 32 und Auslass 34. Durch Verschieben des Schließers 34 erfolgt eine Umschaltung in die zweite Schaltstellung. In dieser ist die zweite Dichtungsanordnung 36 in dichtenden Kontakt mit einem zweiten Ventilsitz 38 gebracht und der Kontakt zwischen erster Dichtungsanordnung 35 und erstem Ventilsitz 38 aufgehoben. In dieser Schaltstellung ist die Fluidverbindung zwischen Einlass 32 und Auslass 34 getrennt und zwischen Haupteinlass 31 und Auslass 34 geöffnet. Diese Stellung des Schließers 34 und die damit verbundene Schaltstellung des Umschaltventils 18 ist für das Ausbilden einer Sterilbarriere geeignet, siehe auch Fig. 7. In dieser Schaltstellung übernimmt das Umschaltventil 18 zudem die Funktion eines Leckageventils zur Detektion von Leckagen an einem der Schließelemente 21 und 22. Der Schließer 34 ist mittels eines geradlinig arbeitenden Antriebes 39 verstellbar. Der Auslass 34 ist zwischen erstem und zweitem Ventilsitz 37 und 38 angeordnet, so dass beim Umschalten zwischen erster und zweiter Schaltstellung der Schließer 34 gegen die Strömungsrichtung des Fluids geschaltet wird, beispielsweise gegen die Strömungsrichtung des durch den Einlass 32 in das Umschaltventil 18 einströmenden Dampfes. Dies bewirkt ein erschütterungsarmes Arbeiten des Umschaltventils 18.

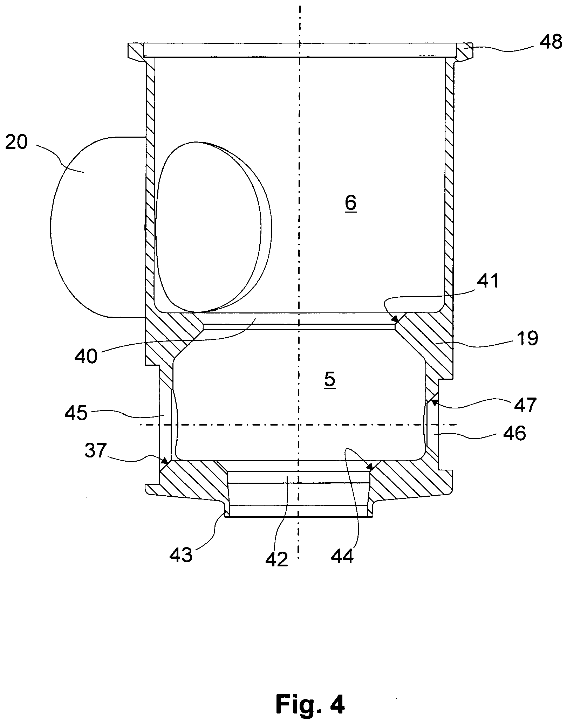

Weitere Einzelheiten des Gehäuses 19 sind in Fig. 4 dargestellt. Der Grundkörper des Gehäuses 19 ist im Wesentlichen zylindrisch und topfförmig gestaltet. In seinem Inneren sind die Einlasskammer 6 und die Kammer 5 ausgeformt. Eine erste Produktöffnung 40 schafft eine Fluidverbindung zwischen Einlasskammer 6 und Kammer 5. Die Produktöffnung 40 umgebend ist ein Ventilsitz 41 vorgesehen, welcher mit dem ersten Schließelement 21 zusammenwirkt. Eine zweite Produktöffnung 42 ist an einer Stirnseite des Topfes ausgebildet und schafft einen Fluidauslass, der von einem Stutzen 43 umgeben ist. Dieser Stutzen 43 ermöglicht es, das Gehäuse 19 mit einer Rohrleitung, insbesondere der zweiten Produktleitung 3, zu verbinden. An der zweiten Produktöffnung ist, dieses umgebend, ein Ventilsitz 44 ausgestaltet, der mit dem zweiten Schließelement 22 zusammenwirkt.

Vorteilhaft sind erste und zweite Produktöffnung 41 und 42 und die damit verbundenen Ventilsitze koaxial und fluchtend zueinander angeordnet. Dies ermöglicht es, die Ventilstangenanordnung 23 mit koaxial ineinander angeordneten Ventilstangen zu gestalten, so dass nur der Hauptantrieb 27 notwendig ist. Der Hauptantrieb 27 ist mittels eines am Gehäuse 19 angebrachten oder ausgeformten Flansches 48 mit dem Gehäuse 19 verbindbar.

Im Gehäuse 19 sind auf der weitgehend zylindrischen Wandfläche auf Höhe der Kammer 5 eine erste und eine zweite Nebenöffnung 45 und 46 vorgesehen, welche Zugänge zur Kammer 5 schaffen. An die erste Nebenöffnung 45 ist das Umschaltventil 18 angeschlossen. An die zweite Nebenöffnung 46 ist das Dampfventil 10 angeschlossen.

Vorteilhaft, um eine kompakte Ventilanordnung zu schaffen, ist gemäß Beispiel der erste Ventilsitz 37 des Umschaltventils 18, der mit dem Schließer 34 zusammenwirkt, in der Wand des Gehäuses 19 und die erste Nebenöffnung 45 umgebend ausgeformt. Die zweite Ventilöffnung 46 ist vorteilhaft von einem Ventilsitz 47 umgeben, der mit dem Schließglied 28 des Dampfventils 10 zusammenwirkt.

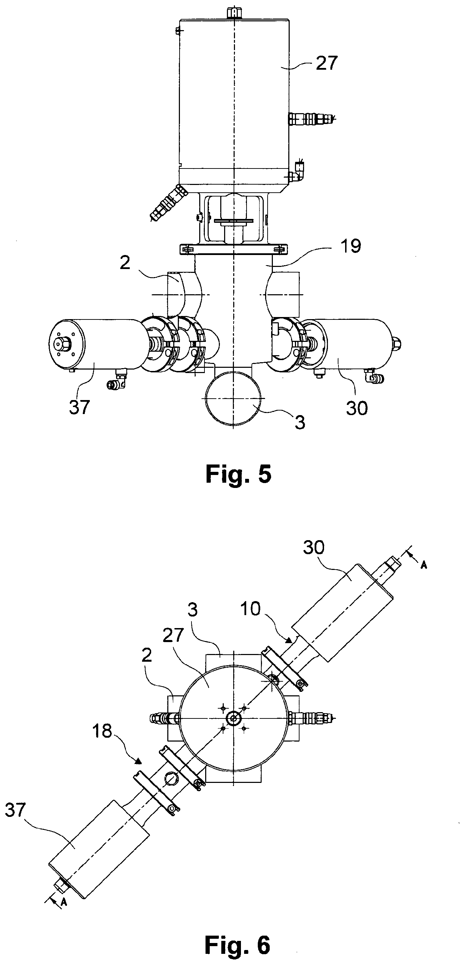

Die Fig. 5 und 6 zeigen die vorteilhaft kompakte Orientierung der einzelnen Komponenten der Ventilanordnung zueinander. Die Ausrichtung von Produktanschluss 20 und Stutzen 43 erlaubt es, erste und zweite Produktleitung 2 und 3 in einem Winkel von 90 Grad zueinander auszurichten. Die Antriebe 30 und 37 liegen in einer Ebene und sind auf sich gegenüberliegenden Seiten des Gehäuses 19 angeordnet und so gegen die Produktleitungen 2 und 3 verdreht, beispielsweise um 45 Grad, dass die Antriebe 30 und 37 im Draufblick nach Fig. 6 zwischen den Produktleitungen 2 und 3 liegen. Die Ebene der Antriebe 30 und 37 liegt zwischen den Ebenen, die durch die Produktleitungen 2 und 3 gebildet werden. Durch den beschriebenen Winkelversatz ist Raum für die Antriebe 30 und 37 sowie Dampfventil 10 und Umschaltventil 18 gegeben, so dass die Ventilanordnung in Bezug auf die Bauhöhe sehr günstig ist. Die raumsparende Wirkung wird gesteigert, wenn die genannten Ebenen parallel zueinander ausgerichtet sind oder nur einen Winkel von wenigen Grad, beispielsweise 10 Grad, einschließen. Übersichtlichkeit und Wartungsfreundlichkeit umfangreicher Anlagen mit vielen Rohrleitungen und Ventilen werden durch eine Ausrichtung von Hauptantrieb 27 und Gehäuse 19 in Schwerkraftrichtung untereinander erreicht.

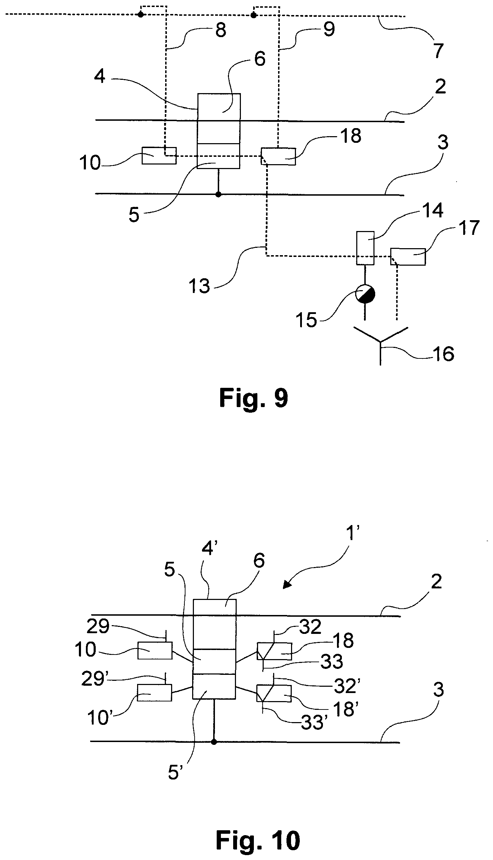

Die Funktionsweise der Ventilanordnung 1 wird anhand der Fig. 7 und 9 erläutert. Jene Rohrleitungsabschnitte und Teile der Ventilanordnung 1, in denen ein Sterilmedium, beispielsweise Dampf, geführt wird, sind zur Verdeutlichung der Funktionsweise gestrichelt dargestellt. Produktfluss innerhalb der Ventilanordnung 1 ist mit einer durchgezogenen Linie dargestellt.

Die Ventilanordnung 1 befindet sich in Fig. 7 in einem Schaltzustand, in dem die Innenräume der Produktleitungen 2 und 3 und die darin geführten Medien steril voneinander getrennt sind. In diesem Betriebszustand der Ventilanordnung 1 sind Kammer 5 und Einlasskammer 6 voneinander getrennt, indem die erste Produktöffnung 41 durch das erste Schließelement 21 verschlossen ist. Gleichzeitig ist die zweite Produktöffnung 42 durch das zweite Schließelement 22 verschlossen.

Das Dampfventil 10 ist geöffnet. Im gezeigten Beispiel wird dies erreicht, indem das Schließelement 28 vom Ventilsitz 47 getrennt und so die zweite Nebenöffnung 46 geöffnet ist.

Das Umschaltventil 10 befindet sich in einem Schaltzustand, in dem es eine Fluidverbindung zwischen Kammer 5 und Entsorgungsleitung 13 schafft und von der Dampfleitung 7 getrennt ist. Der Schließer 34 ist so gestellt, dass erste Dichtungsanordnung 35 und erster Ventilsitz 37 getrennt voneinander sind, während sich zweite Dichtungsanordnung 36 und zweiter Ventilsitz 38 in dichtendem Kontakt befinden. Die erste Nebenöffnung 45 ist geöffnet, so dass Fluid zwischen Kammer 5 und Auslass 33 fließen kann, während der Einlass 32 verschlossen ist.

Durch diese Schaltzustände von erstem und zweitem Schließelement 21 und 22 sowie von Dampfventil 10 und Umschaltventil 18 entsteht in der Kammer 5 eine sterile Barriere, die eine sichere Trennung der Inhalte der Produktleitungen 2 und 3 bewirkt. Leckage, die durch Undichtigkeit von erstem oder zweitem Schließelement 21 oder 22 entsteht, ist in diesem Schaltzustand nachweisbar. Vorteilhaft ist das Zweigventil 14 so geschaltet, dass Fluid zum Kondensatableiter 15 geleitet wird. Dampf wird in der Anlage gehalten, während Kondensat entfernt wird, wodurch die sterilen Eigenschaften der Barriere verbessert werden.

In Fig. 8 ist ein Schaltzustand der Ventilanordnung 1 dargestellt, der für einen Produktionsprozess geeignet ist.

Das Dampfventil 10 ist geschlossen. Im Beispiel befinden sich für diesen Zustand des Dampfventils 10 Schließglied 28 und Ventilsitz 47 der zweiten Nebenöffnung 46 in dichtendem Kontakt.

Der Schließer 34 des Umschaltventils 18 befindet sich in einer Stellung, in der die Fluidverbindung zwischen Einlass 32 und Auslass 33 freigegeben ist, während die erste Nebenöffnung 45 verschlossen ist. Erste Dichtungsanordnung 35 und erster Ventilsitz 37 befinden sich in dichtendem Kontakt.

In der Dampfleitung 7 stehender Dampf wird so nur bis in das Dampfventil 10 und durch das Umschaltventil 18 hindurch zur Entsorgungsleitung 13 geleitet.

Erste und zweite Nebenöffnung 45 und 46 der Kammer 5 sind verschlossen. Erstes und zweites Schließelement 21 und 22 geben erste und zweite Produktöffnung 40 und 42 frei. Eine Fluidströmung, insbesondere des Produkts, zwischen erster und zweiter Produktleitung 2 und 3 durch Kammer 5 und Einlasskammer 6 ist in diesem Schaltzustand der Ventilanordnung 1 freigegeben.

Auch in diesem Schaltzustand ist es vorteilhaft, das Zweigventil 14 so zu schalten, dass durch die Entsorgungsleitung 13 strömender Dampf auf den Kondensatableiter 15 geleitet wird.

In Fig. 9 ist ein Schaltzustand dargestellt, in dem die Ventilanordnung 1 gereinigt wird.

Erstes und zweites Schließelement 21 und 22 befinden sich im Schließzustand und trennen durch dichtenden Kontakt mit dem jeweiligen Ventilsitz 41 und 44 die Kammer 5 von der Einlasskammer 6 und die Kammer 5 von der zweiten Produktleitung 3.

Das Dampfventil 10 ist geöffnet, das Schließglied 28 gibt die zweite Nebenöffnung 46 frei. Das Umschaltventil 18 ist so geschaltet, dass die erste Nebenöffnung 45 freigegeben ist und eine Fluidverbindung zwischen Kammer 5 und Auslass 33 hergestellt ist. Der Einlass 32 ist durch den Schließer 34 verschlossen.

Das Zweigventil 14 ist so geschaltet, dass der Fluidfluss zum Kondensatableiter 15 unterbunden ist. Das Entsorgungsventil 17 ist geöffnet, so dass gasförmiges und flüssiges Fluid in die Entsorgungseinrichtung 16 strömt.

Dieser Schaltzustand erlaubt es, insbesondere die Kammer 5 mit einem hohen Durchsatz von Spülmedium besonders gründlich zu reinigen. Dies ist beispielsweise im Hinblick auf die Reinigung der Falten des ersten Balges 24 vorteilhaft.

Ein Weiterbildung der Ventilanordnung 1' ist in Fig. 10 dargestellt. Diese Ventilanordnung 1' besitzt zusätzlich zur Einlasskammer 6 und der Kammer 5 eine zweite Kammer 5'. Die drei Kammern sind seriell im Fluidstrom hintereinander angeordnet. Fluid tritt aus der ersten Produktleitung 2 in die Einlasskammer 6 ein, durchströmt Kammer 5, tritt von dort in die Kammer 5' ein, verlässt diese und tritt in die zweite Produktleitung 3 ein. Die Kammern 5, 5' und 6 sind mittels getrennt voneinander verstellbaren Verschlusselementen voneinander fluiddicht trennbar. An die Kammer 5 und die zweite Kammer 5' sind jeweils ein Dampfventil 10 und 10' und ein Umschaltventil 18 und 18' angeschlossen. Jedes der Dampfventile 10 und 10' weist einen Dampfeinlass 29 und 29' auf. Beide können an eine gemeinsame Dampfleitung 7 angeschlossen sein. Beide Umschaltventile 18 und 18' weisen einen Einlass 32 und 32' auf, durch die Dampf oder ein anderes Sterilfluid in das jeweilige Umschaltventil 18 und 18' einströmen kann. Jedes Umschaltventil besitzt einen Auslass 33 und 33', durch den Fluid aus der Ventilanordnung 1' ausströmen kann, insbesondere einer Entsorgung zugeführt werden kann. Die Weiterbildung der Ventilanordnung 1' besitzt den Vorteil verbesserter Reinigbarkeit. Es kann in Kammer 5 eine Sterilbarriere ausgebildet sein während die zweite Kammer 5' gereinigt wird. Je nach Anforderung an die Reinigbarkeit und je Prozessabläufen können zusätzlich zu Kammer 5 und zweiter Kammer 5' weitere Kammern vorhanden sein.

### Liste der Bezugszeichen

- 1s: Ventilanordnung gemäß Stand der Technik
- 1: Ventilanordnung
- 1': Ventilanordnung gemäß Weiterbildung
- 2: erste Produktleitung
- 3: zweite Produktleitung
- 4: Produktventil
- 4': Produktventil gemäß Weiterbildung
- 5: Kammer
- 5': zweite Kammer
- 6: Einlasskammer
- 7: Dampfleitung
- 8: erste Zweigleitung
- 9: zweite Zweigleitung
- 10: Dampfventil
- 10': zweites Dampfventil
- 11: Leckageventil
- 12: Zuschaltventil
- 13: Entsorgungsleitung
- 14: Zweigventil
- 15: Kondensatableiter
- 16: Entsorgungseinrichtung
- 17: Entsorgungsventil
- 18: Umschaltventil
- 18': zweites Umschaltventil
- 19: Gehäuse
- 20: Produktanschluss
- 21: erstes Schließelement
- 22: zweites Schließelement
- 23: Ventilstangenanordnung
- 24: erster Balg
- 25: zweiter Balg
- 26: Gehäusedurchführung
- 27: Hauptantrieb
- 28: Schließglied
- 29: Dampfeinlass
- 29': zweiter Dampfeinlass
- 30: Antrieb des Dampfventils
- 31: Haupteinlass
- 32: Einlass
- 32': zweiter Einlass
- 33: Auslass
- 33': zweiter Auslass
- 34: Schließer
- 35: erste Dichtungsanordnung
- 36: zweite Dichtungsanordnung
- 37: erster Ventilsitz
- 38: zweiter Ventilsitz
- 39: Antrieb des Umschaltventils
- 40: erste Produktöffnung
- 41: Ventilsitz
- 42: zweite Produktöffnung
- 43: Stutzen
- 44: Ventilsitz
- 45: erste Nebenöffnung
- 46: zweite Nebenöffnung
- 47: Ventilsitz des Dampfventils
- 48: Flansch

## Patentansprüche

1. Ventilanordnung (1; 1') mit einem Gehäuse (19), mit einer Kammer (5), welche eine erste Produktöffnung (40), eine zweite Produktöffnung (42), eine erste verschließbare Nebenöffnung (45), welche mit einer Dampfleitung (7) verbindbar ist, und eine zweite verschließbare Nebenöffnung (46) aufweist, mit einem ersten Schließelement (21), mittels welchem die erste Produktöffnung (40) verschließbar ist, mit einem zweiten Schließelement (22), mittels welchem die zweite Produktöffnung (42) verschließbar ist, und mit einem der zweiten Nebenöffnung (46) zugeordneten Auslass (33; 33'), **dadurch gekennzeichnet, dass** zwischen zweiter Nebenöffnung (46) und Auslass (33; 33') ein Umschaltventil (18; 18') derart angeordnet ist, dass eine Fluidverbindung des Auslasses (33; 33') mit der zweiten Nebenöffnung (46) durch Schalten des Umschaltventils (18; 18') auf eine Fluidverbindung des Auslasses (33; 33') mit einem Einlass (32; 32'), welcher am Umschaltventil (18; 18') vorgesehen und welcher mit einer Dampfleitung (7) verbindbar ist, bei gleichzeitigem Verschließen der zweiten Nebenöffnung (46) umschaltbar ist und dass die erste Nebenöffnung (45) mittels eines mit der Dampfleitung (7) verbindbaren Dampfventils (10, 10') verschließbar ist.

2. Ventilanordnung nach Anspruch 1, **dadurch gekennzeichnet, dass** erstes Schließelement (21) und zweites Schließelement (22) unabhängig voneinander betätigbar sind.

3. Ventilanordnung nach Anspruch 1 oder 2, **dadurch gekennzeichnet, dass** zwischen erstem Schließelement (21) und zweitem Schließelement (22) ein erster Balg (24) angeordnet ist.

4. Ventilanordnung nach Anspruch 3, **dadurch gekennzeichnet, dass** ein zweiter Balg (25) zwischen zweitem Schließelement (22) und einer Gehäusedurchführung (26) vorgesehen ist.

5. Ventilanordnung nach einem der vorhergehenden Ansprüche, **dadurch gekennzeichnet, dass** das Umschaltventil (18; 18') einen Schließer (34) umfasst, welcher eine erste Dichtungsanordnung (35) und eine zweite Dichtungsanordnung (36) aufweist.

6. Ventilanordnung nach Anspruch 5, **dadurch gekennzeichnet, dass** eine der Dichtungsanordnungen (35, 36) des Schließers (34) mit einem im Gehäuse (19) vorgesehenen Ventilsitz (37) zusammenwirkt.

7. Ventilanordnung nach Anspruch 5 oder 6, **dadurch gekennzeichnet, dass** Schließer (34), Dichtungsanordnung (35, 36) und Ventilsitze (37, 38) des Umschaltventils (18; 18') so gestaltet sind, dass eine jeweilige Schließstellung durch eine Kraft bewirkt wird, die einer jeweils auf den Auslass (33; 33') gerichteten Strömung entgegengerichtet ist.

8. Ventilanordnung nach einem der vorhergehenden Ansprüche, **dadurch gekennzeichnet, dass** erstes Schließelement (21), zweites Schließelement (22) und Umschaltventil (18; 18') mittels druckmittelbetriebenen Antrieben (27, 39) verstellbar sind.

9. Ventilanordnung nach einem der vorhergehenden Ansprüche, **dadurch gekennzeichnet, dass** wenigstens ein zweiter Auslass (33') und eine zweite Kammer (5') mit dritten und vierten Nebenöffnungen vorgesehen sind, wobei Kammer (5) und zweite Kammer (5') nacheinander von Produkt durchströmbar sind, und zwischen vierter Nebenöffnung und zweitem Auslass (33') ein zweites Umschaltventil (18') derart angeordnet ist, dass eine Fluidverbindung des zweiten Auslasses (33') mit der vierten Nebenöffnung durch Schalten des zweiten Umschaltventils (18') auf eine Fluidverbindung des Auslasses (33') mit einem zweiten Einlass (32'), welcher mit der Dampfleitung (7) verbindbar ist, bei gleichzeitigem Verschließen der vierten Nebenöffnung umschaltbar ist.

10. Anlage zur Produktführung mit einem Produktventil (4) zum Schalten eines Produktstromes zwischen einer ersten Produktleitung (2) und einer zweiten Produktleitung (3), mit einer im Produktventil (4; 4') vorgesehenen Kammer (5; 5'), welche von Produkt durchströmbar ist und in welcher eine Barriere ausbildbar ist, **dadurch gekennzeichnet, dass** Anlage eine Ventilvorrichtung (1) nach einem der Ansprüche 1 bis 9 umfasst, dass die Ventilvorrichtung das Produktventil (4; 4') umfasst und dass die Kammer (5) mit einem Umschaltventil (18; 18') verbunden ist, mittels welchem eine Fluidverbindung eines der Kammer (5; 5') zugeordneten Auslasses (33; 33') mit der Kammer (5; 5') durch Schalten des Umschaltventils (18; 18') auf eine Fluidverbindung des Auslasses (33; 33') mit einem Einlass (32; 32'), welcher am Umschaltventil (18; 18') vorgesehen und welcher mit einer Dampfleitung (7) verbunden ist, bei gleichzeitigem Trennen der Kammer (5; 5') von dem Auslass (33; 33') umschaltbar ist, und **dass** ein Dampfventil (10; 10') mit der Kammer (5; 5') und der Dampfleitung (7) verbunden ist.

11. Anlage nach Anspruch 10, **dadurch gekennzeichnet, dass** der Auslass (33; 33') mit einer Entsorgungsleitung (13) verbunden ist, welche mittels eines Zweigventils (14) mit einem Kondensatableiter (15) in Fluidverbindung bringbar ist.

12. Verfahren zum Betreiben einer Anlage mit einer Ventilvorrichtung nach einem der Ansprüche 1 bis 9 und mit einer ersten Produktleitung (2) und einer zweiten Produktleitung (3), welche Produktleitungen (2, 3) mittels eines Produktventils (4), welches in der Ventilvorrichtung enthalten ist, miteinander verbindbar sind, wobei in einer Kammer (5; 5') des Produktventils (4; 4') eine Sterilbarriere ausbildbar ist, **dadurch gekennzeichnet, dass** vor dem Öffnen des Produktventils (4; 4') zum Verbinden von erster und zweiter Produktleitung (2, 3) ein Umschaltventil (18; 18') so umgeschaltet wird, dass eine Fluidverbindung zwischen Kammer (5; 5') und einer Entsorgungsleitung (13) auf eine Fluidverbindung zwischen Dampfleitung (7) und der Entsorgungsleitung (13) umgeschaltet wird, und ein zwischen Kammer (5; 5') und Dampfleitung (7) vorgesehenes Dampfventil (10, 10') geschlossen wird.

13. Verfahren nach Anspruch 12, **dadurch gekennzeichnet, dass** die Entsorgungsleitung (13) über einen Kondensatableiter (15) mit einer Entsorgungseinrichtung (16) verbunden wird.

## Claims

1. A valve assembly (1; 1') having a housing (19) with a chamber (5) that has a first product opening (40), a second product opening (42), a first closable ancillary opening (45) that can be connected to a steam line (7) and a second closable ancillary opening (46), having a first closing element (21) by means of which the first product opening (40) can be closed, having a second closing element (22) by means of which the second product opening (42) can be closed, and having an outlet (33; 33') assigned to the second ancillary opening (46), **characterized in that** a switchover valve (18; 18') is arranged between the second ancillary opening (46) and outlet (33; 33') such that a fluidic connection between the outlet (33; 33') and the second ancillary opening (46) can be switched by switching the switchover valve (18; 18') to a fluidic connection of the outlet (33; 33') with an inlet (32; 32') that is provided on the switchover valve (18; 18') and that can be connected to a steam line (7) while simultaneously closing the second ancillary opening (46), and that the first ancillary opening (45) can be closed by means of a steam valve (10, 10') that can be connected to the steam line (7).

2. The valve assembly according to claim 1, **characterized in that** the first closing element (21) and second closing element (22) can be actuated independent of each other.

3. The valve assembly according to claim 1 or 2, **characterized in that** a first bellows (24) is arranged between the first closing element (21) and second closing element (22).

4. The valve assembly according to claim 3, **characterized in that** a second bellows (25) is provided between the second closing element (22) and a housing leadthrough (26).

5. The valve assembly according to one of the preceding claims, **characterized in that** the switchover valve (18; 18') comprises a closing element (34) that has a first seal assembly (35) and a second seal assembly (36).

6. The valve assembly according to claim 5, **characterized in that** one of the seal assemblies (35, 36) of the closing element (34) interacts with a valve seat (37) provided in the housing (19).

7. The valve assembly according to claim 5 or 6, **characterized in that** the closing element (34), seal assembly (35, 36) and valve seats (37, 38) of the switchover valve (18; 18') are designed to effectuate a respective closed position by a force against a flow directed toward the outlet (33; 33').

8. The valve assembly according to one of the preceding claims, **characterized in that** the first closing element (21), second closing element (22) and switchover valve (18; 18') are adjustable by means of drives (27, 39) that operate by means of pressure medium.

9. The valve assembly according to one of the preceding claims, **characterized in that** at least one second outlet (33') and one second chamber (5') are provided with third and fourth ancillary openings, wherein product can sequentially flow through the chamber (5) and second chamber (5'), and a second switchover valve (18') is arranged between the fourth ancillary opening and second outlet (33') such that a fluidic connection of the second outlet (33') to the fourth ancillary opening can be switched by switching the second switchover valve (18') to a fluidic connection of the outlet (33') with a second inlet (32') that can be connected to the steam line (7) while simultaneously closing the fourth ancillary opening.

10. A system for conveying product with a product valve (4) for switching a product flow between a first product line (2) and a second product line (3) with a chamber (5; 5') provided in a product valve (4; 4') through which product can flow and in which a barrier can be formed, **characterized in that** the system comprises a valve device (1) according to one of claims 1 to 9, the valve device comprises the product valve (4; 4'), and the chamber (5) is connected to a switchover valve (18; 18,) by means of which a fluidic connection of an outlet (33; 33') assigned to the chamber (5; 5') with the chamber (5; 5') can be switched by switching the switchover valve (18; 18') to a fluidic connection of the outlet (33; 33') with an outlet (32; 32') that is provided on the switchover valve (18, 18') and that is connected to a steam line (7) while simultaneously separating the chamber (5; 5') from the outlet (33; 33'), and a steam valve (10; 10') is connected to the chamber (5; 5') and the steam line (7).

11. The system according to claim 10, **characterized in that** the outlet (33; 33') is connected to a waste line (13) that can be brought into fluidic connection with a condensate trap (15) by means of a branch valve (14).

12. A method for operating a system having a valve device according to one of claims 1 to 9, and having a first product line (2) and a second product line (3), said product lines (2, 3) being connectable to each other by means of a product valve (4) that is contained in the valve device, wherein a sterile barrier can be formed in a chamber (5; 5') of the product valve (4; 4'), **characterized in that** before opening the product valve (4; 4') to connect the first and second product line (2, 3), a switchover valve (18; 18') is switched over such that a fluidic connection between chamber (5; 5') and a waste line (13) is switched to a fluidic connection between steam line (7) and the waste line (13), and a steam valve (10, 10') provided between chamber (5; 5') and a steam line (7) is closed.

13. The method according to claim 12, **characterized in that** the waste line (13) is connected by a condensate trap (15) to a disposal apparatus (16).

## Revendications

1. Ensemble de soupape (1 ; 1') avec un boîtier (19) comprenant une chambre (5) présentant une première ouverture de produit (40), une deuxième ouverture de produit (42), une première ouverture annexe fermable (45) apte à être reliée à une conduite de vapeur (7) et une deuxième ouverture annexe fermable (46), avec un premier élément de fermeture (21) permettant de fermer la première ouverture de produit (40), avec un deuxième élément de fermeture (22) permettant de fermer la deuxième ouverture de produit (42), et avec une sortie (33 ; 33') attribuée à la deuxième ouverture annexe (46), **caractérisé en ce qu'**une soupape de commutation (18 ; 18') est disposée de telle façon entre la deuxième ouverture annexe (46) et la sortie (33 ; 33'), qu'une liaison fluidique entre la sortie (33 ; 33') et la deuxième ouverture annexe (46) peut être commutée par commutation de la soupape de commutation (18 ; 18') sur une liaison fluidique entre la sortie (33 ; 33') et une entrée (32 ; 32') prévue sur la soupape de commutation (18 ; 18') et apte à être reliée à une conduite de vapeur (7), simultanément avec la fermeture de la deuxième ouverture annexe (46), et **en ce que** la première ouverture annexe (45) peut être fermée au moyen d'une soupape de vapeur (10 , 10') apte à être reliée à la conduite de vapeur (7).

2. Ensemble de soupape selon la revendication 1, **caractérisé en ce que** le premier élément de fermeture (21) et le deuxième élément de fermeture (22) peuvent être actionnés indépendamment l'un de l'autre.

3. Ensemble de soupape selon la revendication 1 ou 2, **caractérisé en ce qu'**un premier soufflet (24) est disposé entre le premier élément de fermeture (21) et le deuxième élément de fermeture (22).

4. Ensemble de soupape selon la revendication 3, **caractérisé en ce qu'**un deuxième soufflet (25) est prévu entre le deuxième élément de fermeture (22) et un passage de boîtier (26).

5. Ensemble de soupape selon l'une des revendications précédentes, **caractérisé en ce que** la soupape de commutation (18 ; 18') comporte un organe de fermeture (34) présentant un premier dispositif d'étanchéité (35) et un deuxième dispositif d'étanchéité (36).

6. Ensemble de soupape selon la revendication 5, **caractérisé en ce que** l'un des dispositifs d'étanchéité (35, 36) de l'organe de fermeture (34) coopère avec un siège de soupape (37) prévu dans le boîtier (19).

7. Ensemble de soupape selon la revendication 5 ou 6, **caractérisé en ce que** l'organe de fermeture (34), le dispositif d'étanchéité (35, 36) et les sièges de soupape (37, 38) de la soupape de commutation (18 ; 18') sont conçus de telle façon qu'une position de fermeture respective est établie par une force opposée à un écoulement orienté respectivement vers la sortie (33 ; 33').

8. Ensemble de soupape selon l'une des revendications précédentes, **caractérisé en ce que** le premier élément de fermeture (21), le deuxième élément de fermeture (22) et la soupape de commutation (18 ; 18') peuvent être réglés par des entraînements actionnés par fluide sous pression (27, 39) .

9. Ensemble de soupape selon l'une des revendications précédentes, **caractérisé en ce qu'**il est prévu au moins une deuxième sortie (33') et une deuxième chambre (5') avec des troisième et quatrième ouvertures annexes, dans lequel la chambre (5) et la deuxième chambre (5') peuvent être traversées consécutivement par un produit, et **en ce qu'**une deuxième soupape de commutation (18') est disposée de telle façon entre la quatrième ouverture annexe et la deuxième sortie (33'), qu'une liaison fluidique entre la deuxième sortie (33') et la quatrième ouverture annexe peut être commutée par commutation de la deuxième soupape de commutation (18') sur une liaison fluidique entre la sortie (33') et une deuxième entrée (32') apte à être reliée à la conduite de vapeur (7), simultanément avec la fermeture de la quatrième ouverture annexe.

10. Installation pour le guidage d'un produit, comprenant une soupape de produit (4) pour la commutation d'un flux de produit entre une première conduite de produit (2) et une deuxième conduite de produit (3), ainsi qu'une chambre (5 ; 5') prévue dans la soupape de produit (4 ; 4'), laquelle peut être traversée par un produit et dans laquelle une barrière peut être formée, **caractérisée en ce que** l'installation comporte un dispositif de soupape (1) selon l'une des revendications 1 à 9, **en ce que** le dispositif de soupape comporte la soupape de produit (4 ; 4') et **en ce que** la chambre (5) est reliée à une soupape de commutation (18 ; 18'), au moyen de laquelle une liaison fluidique entre une sortie (33 ; 33') attribuée à la chambre (5 ; 5') et la chambre (5 ; 5') peut être commutée par commutation de la soupape de commutation (18 ; 18') sur une liaison fluidique entre la sortie (33 ; 33') et une entrée (32 ; 32') prévue sur la soupape de commutation (18 ; 18') et apte à être reliée à une conduite de vapeur (7), en séparant simultanément la chambre (5 ; 5') de la sortie (33 ; 33'), et **en ce qu'**une soupape de vapeur (10 ; 10') est reliée à la chambre (5 ; 5') et à la conduite de vapeur (7).

11. Installation selon la revendication 10, **caractérisée en ce que** la sortie (33 ; 33') est reliée à une conduite d'évacuation (13) apte à être mise en liaison fluidique avec un purgeur de condensat (15) au moyen d'une soupape d'embranchement (14).

12. Procédé pour la commande d'une installation comprenant un dispositif de soupape selon l'une des revendications 1 à 9 et une première conduite de produit (2) et une deuxième conduite de produit (3), lesdites conduites de produit (2, 3) pouvant être reliées entre elles au moyen d'une soupape de produit (4) contenue dans le dispositif de soupape, dans lequel une barrière stérile peut être formée dans une chambre (5 ; 5') de la soupape de produit (4 ; 4'), **caractérisé en ce qu'**avant l'ouverture de la soupape de produit (4 ; 4') pour relier les première et deuxième conduites de produit (2, 3), une soupape de commutation (18 ; 18') est commutée de telle façon qu'une liaison fluidique entre la chambre (5 ; 5') et une conduite d'évacuation (13) est commutée sur une liaison fluidique entre la conduite de vapeur (7) et la conduite d'évacuation (13), et une soupape de vapeur (10, 10') prévue entre la chambre (5 ; 5') et la conduite de vapeur (7) est fermée.

13. Procédé selon la revendication 12, **caractérisé en ce que** la conduite d'évacuation (13) est reliée à un système d'évacuation (16) par le biais d'un purgeur de condensat (15) .
